# EUROPEAN PATENT APPLICATION

(11) **EP 1 785 893 A1**
(43) Date of publication of application: **16.05.2007**
(21) Application number: 05257038.9
(22) Date of filing: 15.11.2005
(51) Int. Cl.: G06F 17/30

(54) **Temporal relational databases**

(71) Applicant: Pickering, Paul, Bray-on-Thames, Berkshire SL6 2BW (GB)
(72) Inventor: Pickering, Paul, Bray-on-Thames, Berkshire SL6 2BW (GB)
(74) Representative: Deans, Michael John Percy

(57) **Abstract**

An append-only relational database comprises a plurality of data records, in which each data record includes a plurality of fields, including a transaction time identifying the time of creation of the said record in the database, and in which each modification, which may include a logical deletion, of an existing data record creates a further data record in said database that comprises the data of the said existing data record modified to incorporate the said modification, without altering the existing data record. Methods are also described for obtaining an accurate view of such a database at any selected point in time for audit or forensic purposes, or for obtaining a most valid view, and also for adding temporality to an existing non-temporal relational database.

## Description

This invention relates to temporal relational databases and to a method for adding temporality to a pre-existing non-temporal relational database.

The data used in computer systems typically has a time-related component. Systems as diverse as financial, medical and travel systems already contain certain objects that are in some way time-related.

The time elements that form intrinsic components of a databased computer system, and that have a validity in the real world represented by a computer system can be termed ***valid time*** components, because they describe the time at or during which the objects that exist in the database represent real-world objects. Reference is made to Rowe, L. and M. Stonebraker: "The POSTGRES Papers", Technical Report UCB/ERL M86/85, University of California, June 1987, incorporated herein by reference.

***Valid time*** components are already part of most databases. The data therein may include Editions and Versions. An Edition is rooted in the real world and will inherently have a time associated with it, although the precision may be quite coarse. In an ordinary (non-temporal) database, a Version of a data record does not have any inherent time in the real world.

There is a second type of time element in the handling of databases. This is related entirely to the operation of the database itself, and has no corresponding component among the real world objects that the computer system represents. This is ***transaction time.*** It represents the point in time at which an object is updated in a database. As such, it can only take a value at the moment the database is updated. Reference is made to Jensen, C. S., L. Mark and N. Rousopoulos: "Incremental Implementation Model for Relational Databases with Transaction Time", IEEE Transactions on Knowledge and Data Engineering", 3, No. 4, Dec 1991, pp. 461-473, incorporated herein by reference.

***Valid time*** components and ***transaction times*** are independent of each other as explained in Snodgrass, R.T. and I. Ahn: "A Taxonomy of Time in Databases," Proceedings of ACM SIGMOD International Conference on Management of Data, Ed. S. Navathe, Association for Computing Machinery, Austin, TX: May 1985, pp. 236-346.

Among the many prior Patent disclosures relating to databases having a degree of temporality are the following: US 5970503 Eisenberg discloses a method for updating the structure of a database. Field definitions defining different versions of the database structure are stored together with an effective date for that version. When the database structure is changed only revised field definitions are stored and the stored effectivity table is updated only with changes in the field definitions, version changes and the effective date thereof. EP 0520459 Digital Equipment Corp. discloses a system for providing an historical perspective into a database of information objects in which the latest version of each information object is stored together with an index relating to changes in the objects. The database stores information about differences from earlier versions of each object, together with information tags in the index so that a complete earlier version could be reconstructed, if required, for any earlier point in time. EP 0984369 International Computers Ltd. discloses a database in which updating either adds a newly created concrete record or a new delta record that records the changes from a previous concrete record in the system. Records may also be archived (that is: removed from the system) and stored in an archive. A current or historical version of a record could he reconstructed from the concrete, delta and archive records. US 6185556 Snodgrass et al. discloses a system for updating or deleting rows in a temporal table of a database using an SQL program. The table is split into multiple rows and the individual rows have associated effective periods during which no changes are made, which effective periods do not span the beginning or end of a period of validity. US 2003-135520 Mitchell et al. is concerned with tracking changes in a body of uncodified or codified law such as the United States Code, and discloses a database that stores different versions of parts of that law, each such version having a valid time associated therewith being the period during which that version of that part of the law was valid legally.

Temporality may also arise in computerised systems concerned with items other than relational databases. Thus, EP 1094411 Sun Microsystems, Inc. is concerned with different versions of a document that may exist over time, rather than with a temporal database. A document repository is proposed in which existing current versions of a document are stored in a current storage unit in memory, while complete earlier versions of each document are stored in an earlier version unit in memory, which is effectively an archive. GB 2396928 Quicksilva Ltd. is concerned with a workflow management system rather than with a temporal database. A suite of applications including a workflow engine allows a user with appropriate privileges to track progress of a task, view the full audit trail history, or review all task versions and revisions.

The present invention in its alternative aspects proposes a temporal relational database and also a method for adding temporality to a pre-existing non-temporal relational database. A ***non-temporal database*** is one in which transaction time is not a primary key of its data records; and a ***temporal database*** is one in which it is.

According to a first aspect of this invention, there is provided an append-only relational database comprising a plurality of data records, in which each data record includes a plurality of fields, including a transaction time identifying the time of creation of the said record in the database, and in which each modification, which may include a logical deletion, of an existing data record creates a further data record in said database that comprises the data of the said existing data record modified to incorporate the said modification, without altering the existing data record.

A database of this kind employs transaction time as an element of the primary key of its objects and is ***append only**.* With every database update, a new object (data record) is created with all of the attributes of the original object, some of which may have been updated, and with a new transaction time. As the transaction time now forms part of an object's identifier, when an updated object is stored, the version of that object from before the time before the update occurred remains in the database.

An accurate view of the database at any selected point in time can be obtained for audit or forensic purposes, where any individual data record may have a plurality of other corresponding data records equally available in said database and consisting of versions of that data record, by setting a reference point equal to the selected point in time, and viewing one or more records in said database by selecting for each data record of interest that version of that data record that is not flagged as dead that has the most recent transaction time preceding the reference point.

In a second and alternative aspect thereof, the invention provides a method for controlling a relational database comprising a plurality of data records, in which each data record includes a plurality of fields, the method comprising:
providing each said data record with a transaction time field identifying the time of creation of the said record in the database; and
whenever seeking to modify an existing data record in said database by modifying data in said existing data record or by a logical deletion, selecting the version of that existing data record in said database that is not dead that has the most recent transaction time, and creating a further data record comprising the data of the selected said existing data record modified to incorporate the said modification and given a current transaction time, said creating step being performed without altering the selected version or any previous version of the existing data record in said database.

The invention provides, in a third alternative aspect thereof, a method for adding temporality to an existing non-temporal relational database comprising a plurality of pre-existing data records each including a plurality of fields, the method comprising:
for each pre-existing data record, creating a new data record in said database corresponding to the said pre-existing data record provided that no such corresponding data record already exists,
   each said new data record having fields comprising said plurality of fields and at least one field additional to said plurality of fields, said at least one additional field including at least a transaction time field identifying the time of creation of the said record in the database, the data in the said plurality of fields in said new data record being identical to the data in the said plurality of fields in said pre-existing data record;
and, whenever seeking to modify either an existing data record in the database that includes the said at least one additional data field or a said pre-existing data record for which there is at least one corresponding existing data record in the database that includes the said at least one additional field, the modification consisting of modifying data in said existing data record or of a logical deletion, carrying out the steps of:
   selecting the version of that existing data record in said database that is not dead that has the most recent transaction time, and creating a further data record in said database,
   the further data record comprising the data of the selected said existing data record modified to incorporate the said modification, and
   the said creating a further record step being performed without altering the selected version or any previous version of the existing data record in said database.

According to this method a new temporal record corresponding to a pre-existing non-temporal record may be created at an arbitrary time of the Converter's choosing. Once a pre-existing record has a corresponding temporal record, it is the temporal record that is modified thereafter. Effectively all valid records in the database remain available throughout the period of conversion.

If conversion to a temporal database takes place over a period of time during which access to the original non-temporal database is required with parallel running until the conversion is complete (or complete, tested and approved), each update in the temporal records resulting in a new data record or in a further data record is replicated in the pre-existing non-temporal records by a modification of the data in the pre-existing data record.

In all the above cases, the said at least one additional field preferably additionally includes one or more of a User field identifying the user name of the maker of the data record, a Location field identifying the workstation at which the said data record was created, a Dead flag identifying a logical deletion if creation of the data record corresponded to a logical deletion, a Process field identifying the top process that was running when the data record was created (to distinguish between an interactive process where an update was made via a data entry panel such as a keyboard, and batch/automatic processes), and a Verifying Time Stamp field indicating that the record is valid.

The databases referred to hereinabove are preferably stored in a computer readable form in memory means selected from magnetic and optical storage devices. The methods are preferably accomplished on a computer system, though neither the particular nature of the memory means, nor the particular nature of the computer system, which may comprise anything from a stand-alone device such as a PC or lap-top to a distributed network which may include Internet links, nor the particular nature of the programs by which data is manipulated are of any significance.

In the accompanying drawings:
Fig. 1 schematically illustrates a computer system storing a database in memory means;
Fig. 2 schematically illustrates a data record in a non-temporal database; and
Fig. 3 schematically illustrates a corresponding data record in a temporal database.

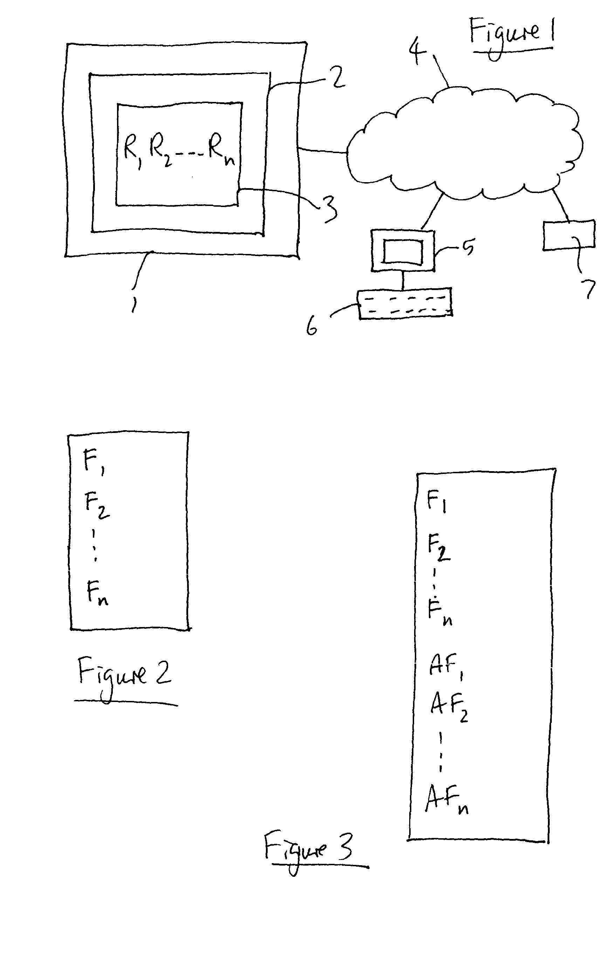

Referring first to Fig. 1, the computer system illustrated includes a server 1 on which a database 2 is stored in memory 3, the database comprising a plurality of data records R1, R2,...Rn, each comprising a plurality of fields F1, F2,...Fn, as shown in Fig. 2. Server 1 is connected in a network 4, which may comprise a LAN, an Intranet or an Extranet such as the Internet. Network 4 includes one or more workstations 5 at which updates to the database may be made employing a data entry panel 6 such as a keyboard. The computer system may also allow for batch/automatic processes to update the data records from a batch/automatic workstation 7 such as a server.

A typical ordinary (non-temporal) relational database (Fig. 2) comprises a plurality of data records each comprising a plurality of data fields that are related to each other by rules established for the particular database. Neither the nature of those fields, the data they contain, nor the rules that relate fields and the data they contain to each other are of any importance to the present invention, save for the fact that, being a non-temporal database, transaction time does not serve as a primary key in the data records.

A non-temporal database may be converted into a temporal one, as explained below, so that future updates may be captured within a time-oriented context.

In an ordinary (non-temporal) database a new ***Version*** of a data record is created by modifying an existing data record, but the original record is not retained. Although a Transaction Time is inherently associated with the update, since the modification occurs at a specific time, since there is no Transaction Time field in a non-temporal data record, the new Version is not time-stamped. Thus, Versions have no time attribute.

In one method for conversion to temporality, existing Versions are supplied with a "VerifyingTimeStamp" to artificially anchor them in time. The VerifyingTimeStamp can thus be given a simple initial value that corresponds to the original creation point of the object (data record), or of the system, or a convenient and ancient "zero" date.

In the conversion to temporality, data records are given additional fields AF1, AF2,... AFn (Fig. 3). The preferred additional fields are set out in *Table 1* below, but must necessarily include a Transaction Time, which serves as a Version Time Stamp as explained below. Preferably they also include a Verifying Time Stamp to indicate whether the data record is currently valid, if such a field is not already included in the original fields F1, F2,... Fn.

| **Table 1- Extensions to the Primary Key** | |
|---|---|
| *Transaction Time* | Transaction Time serves effectively as a Version Time Stamp and is associated with every data record, being time of the transaction that updated the object (data record). It takes the highest precision that the database software can |
| | assign. |
| *User* | User consists of the username or other identifier of the maker of the update. |
| *Location* | Location identifies the workstation at which the update occurred. |
| *Process* | Process is the name of the top process that was running when the update happened. The purpose of including this field is to make it possible to distinguish between interactive processes where updates are made via a data-entry panel, and batch/automated processes. |
| *Dead Flag* | This flag is set to TRUE when the object (data record) undergoes a (logical) deletion. The deleted record is written to the database as a new record, but with the Dead Flag at TRUE. |
| *Verifying Time Stamp* | This field is applied to Version objects only as Editions will already have an Edition Time Stamp providing an anchor in the real world. Genuine updates are distinguished from simple corrections by having a Verifying Time Stamp that matches the Version Time Stamp (Transaction Time). |

Following conversion, the database is an append-only, fully temporal, relational database. In other words, when a User (which may include a batch/automatic process User) seeks to modify an existing data record in the database, a new data record corresponding to the original but including the modification is created alongside the original data record. The original data record remains unaltered.

Conversion of an original non-temporal data record to a temporal data record in the temporal database may take place at an arbitrary time of a Converter's choosing. Apart from the new fields, the new temporal data record will be the same as the original data record.

Parallel running of the temporal and non-temporal databases is feasible during the period conversion is taking place. Where there is no corresponding new temporal record, the pre-existing data record may simply be updated as previously before conversion commenced. Where an update is sought to a data record for which there is both a pre-existing non-temporal record and also a corresponding new temporal record, the new temporal record is updated (to create a further temporal record alongside the essentially unaltered new temporal record, as explained above) and the update is replicated into the non-temporal database by means of a process running at the filing (trigger) level of the non-temporal database to update the pre-existing temporal record as well, in the manner such a data record would have been updated before conversion was started.

When the conversion is fully complete, and there are no remaining pre-existing non-temporal data records that do not have a corresponding new temporal data record, the pre-existing data records may be deleted, archived, or ignored as if they were no longer present, in further operation of the (now fully temporal) database. Up to that point, if the database is to be available for use, an arrangement for parallel working is required.

Following conversion, when an object (data record) is saved, the additional fields are populated for the Location and User and Process making the update. In any instance, the combination of the additional fields and the original record key will be unique.

The fully temporal database following completion of conversion is no different in structure or operation than a fully temporal append-only relational database created from the outset with both the fields F1, F2,... Fn and the fields AF1, AF2,... AFn. In both cases, in use of the database, there is no distinction between the storage method or structure of the "current" record as compared to corresponding earlier ones with essentially the same identity that were stored at earlier transaction times. As a result, every item in the database is equally accessible at all times, and no reconstructive operations, with their concomitant time delay, are required in order to make the data available (as distinct from the situation with prior proposals such as those of International Computers Ltd. or of Snodgrass *et al.* referred to *infra.).* There is no need to co-ordinate with the time-stamping used in any other records when an update occurs. This is a far simpler implementation than that required by *valid-period* or *valid-start*/*valid-stop* methods of the kind employed in the Internatioonal Computers Ltd. and Snodgrass *et al.* disclosures referred to *infra.*

If parallel running has been adopted, as explained above, the update of the temporal database is replicated in an ordinary update to the non-temporal database with VerifyingTimeStamps defaulting to the same value as the corresponding VersionTimeStamp.

Retrieving records from the fully temporal append-only database differs from the non-temporal case because the temporal database is likely to have many records matching the selection criteria (disregarding time-based criteria on the additional fields) for each matching record in a non-temporal database. Each such record exists as the result of a VersionStamped (Transaction Date) update to the database at an earlier point in time.

All such earlier points in time are available to be queried without the need to rebuild the database from its audit trails. This is achieved by setting a global value for each retrieval process - a ReferencePoint - to the relevant point in time. For queries conducted in the "present" moment, the ReferencePoint is the time-stamp corresponding to the current date and time. In either case, the database is being asked to return a snapshot of its state at the ReferencePoint.

A query based on the VersionStamp only, and therefore upon Transaction time, produces an ***accurate*** view of the data as it existed in the database at the ReferencePoint. This ***accurate*** view is suitable for Audit purposes, including forensic reconstruction of the database.

The plan for record retrieval is to locate the newest Version, where the newest is not "Dead", that has a VersionStamp up to and including the ReferencePoint.

To illustrate this, in standard SQL, take this basic query against a non-temporal Customers Table:
Select*
from Customers C

In order to return the appropriate objects to give an *accurate* view, from the temporal database, the following clauses are appended so as to eliminate, for each customer, all temporal rows except for the most recent one that precedes the ReferencePoint:
where C.DFlag = FALSE
and C.VersionStamp = (Select max(C1. VersionStamp)
from Customers C1
where C.ID=C1.ID
and C1. VersionStamp <= %ReferencePoint)
In this example, the ID field represents all of the record identifier in the non-temporal database.

Depending on circumstances a different view may be desired. For example, when conducting a statistical analysis, it may be desirable to include information that was added or corrected at a later point. Under these circumstances it is more appropriate to use Valid time in the comparison. Valid time and Transaction time are orthogonal, so there is every reason to expect a quite different result when a Valid time such as an EditionStamp or a VerifyingTimeStamp is used. Record retrieval based on either of these will produce a best ***quality*** view of the database.

As an illustration, the standard SQL that will generate a quality view of an Editions table would be:
Select *
from Editions E
where E.DFlag = FALSE
and E.EditionStamp <= %ReferencePoint
and E.VersionStamp = (Select max(E1.VersionStamp)
from Editions E1
where E.ID = E1.ID)
and a quality view of a Versions table:
Select *
from Versions V
where V.DFlag = FALSE
and V. VerfyingTimeStamp <= %ReferencePoint
and V. VersionStamp = (Select max(V1. VersionStamp)
from Versions V1
where V.ID = V1.ID)

Where best ***quality*** is required, the overriding need is to make use of the most complete and correct data available. Using VersionStamps in these queries could result in valuable data being excluded if it had arrived in the database, or been corrected, later than the ReferencePoint. However, by comparing the ReferencePoint with the EditionStamp (for Edition records) or the VerifyingTimeStamp (for Version records), instead of the VersionStamp, this problem is overcome. The VersionStamp is still used to extract the most recently updated row.

During routine operations of the database, when records are being retrieved in order to be updated and re-saved, the temporal database operates from an *accurate* viewpoint, with the ReferencePoint set to the actual date and time.

Where all the additional fields set out in Table 1 (above) are employed, every update and deletion is permanently recorded in the temporal database together with details as to where and by whom the update was effected. Accordingly, it is no longer necessary to keep separate audit trails, no matter how sensitive the data is. By retrieving data based on VersionTimeStamps falling between two points in time, any complete audit trail can be retrieved on request.

Forensic reconstruction of past events can be achieved simply by querying the database. Accountability is in-built: bad practice cannot be concealed and rogue elements cannot obliterate their tracks.

Transfer of records from a particular database of the kind described herein to another of similar kind can be achieved in a complete manner including the entire history of related objects, without any need to also extract historical information from a number of external audit trails: a task so costly and difficult that it is usually not even attempted. During such transfer, records are replaced intact without re-stamping transaction times.

The system described hereinabove may be further enhanced by adding security features for enhancing audit of the system. Separate from the set of data records, the database includes a Security Table (Table 2, below) of the "Editions" type, with certain fields corresponding to fields of Table 1 and carrying a precise - to the highest precision available in the environment where it is used - Edition TimeStamp.

**Table 2**

| Field | Description |
|---|---|
| E_User | Required. Being a username, or a group of users, or a function that returns a username |
| E_Process | Optional. Being the identifier of the process, or a set of processes, or a function that returns the name of a process that can update information in the database. Corresponds to a Process as defined in Table 1 |
| E_Location | Optional. Being the identifier of a location, or a set of locations, or a function that returns the name of a location from which an update to the information in the database can |
| | occur. Corresponds to a Location already defined in Table 1 |
| E_Table | Required. Being the name of a data table in the database, or a function that returns a Table name. |
| E_Primary_Key | Required. Being the primary record identifier of a record, or the primary identifiers of a set of records, or a function that returns the primary key of a record. |
| E _Column_Name | Optional. Being the name of a Column of data as identified in "Table" and "Primary Key" above. If omitted then implies all data columns. |

This Table effectively identifies for each potential User, what they are authorised to update in the database. A selection clause based on the contents of Table 2 provides an optimal Validity viewpoint of the data.

Valid views based upon the Edition TimeStamp of the above Security Table and the TransactionTimestamp of a corresponding database update will select out only those updates where the E_User, and E_Process and/or E_Location where specified, of the database update are Valid.

The Validity of an update can thus be determined, namely whether it was made by someone authorised to do so. Because the Table is of the Editions-type, updates could be made in the database by someone not normally authorised to do so (for example, someone covering for a colleague on vacation) who may be authorised after making the updates, which will then be treated as having been validly made.

As an illustration, a query in SQL seeking a maximal validity view may take the following form:
Select * from Customers C
where C.DFlag = FALSE
and C.VersionStamp = (Select max(C1. VersionStamp)
from Customers C1
where C.ID = C1.ID
and C1 .VersionStamp <= %ReferencePoint)
And where exists(
Select * from SECURITY ESS
Where ESS.E_User = C1.User
And ESS.E_Table = "Customers"
And ESS.E_Primary_Key = C1.ID
And ESS.DFlag = False

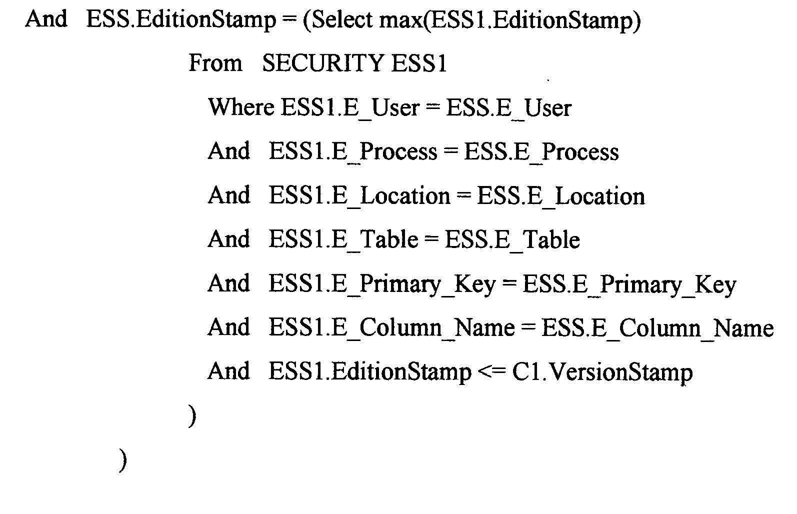

The first section of this query forms a query for accuracy, while the second section constitutes a security check where there exists a Table of Security (Table 2, above) here called SECURITY. Such queries are only readily possible because the database creates a new updated record whenever any change is made, while retaining the previous record unchanged and equally available in the database.

For a full audit trail to be readily available, all the additional fields of Table 1 will be employed. Similarly all the fields of Table 2 will be used for best security results. However, a database that employs less than all the fields of Table 1 will still prove useful, provided that Transaction Time and Validity are employed. Similarly omitting E_Location and E_Process will still allow a level of security to be applied, albeit less than the optimal potentially available.

Because the improvements described herein may be applied to relational databases of many kinds employing different computer programs to enter, process and manipulate data, and data of almost any character, and are not dependent on the characteristics of any such database, its data, its relational rules or the programs it employs, it is believed that a person of ordinary skills in relation to databases should be able readily to apply the lessons taught herein to whatever the circumstances of a particular non-temporal database to convert it to a temporal database, without further description of particular databases or of particular programs useful for databases. Equally well, it is believed that the lessons taught herein in relation to temporal relational databases generally will enable a person of ordinary skills in databases to devise and populate such a database using whatever programming tools with which they have familiarity, without need for further explanation herein.

## Claims

1. An append-only relational database comprising a plurality of data records, in which each data record includes a plurality of fields, including a transaction time identifying the time of creation of the said record in the database, and in which each modification, which may include a logical deletion, of an existing data record creates a further data record in said database that comprises the data of the said existing data record modified to incorporate the said modification, without altering the existing data record.

2. A data base according to Claim 1, wherein a particular data record may have a plurality of corresponding data records in said database, each consisting of versions of the said data record with different transaction times, and wherein data records are selected for modification by selecting from a set of data records corresponding to a particular data record that version with the most recent transaction time that did not consist of a logical deletion.

3. A database according to Claim 1 or Claim 2, wherein said plurality of fields includes at least one of a User field identifying the user name of the maker of a particular data record, a Location field identifying the workstation at which the said data record was created, a Dead flag identifying a logical deletion if creation of the said data record corresponded to a logical deletion, a Process field identifying the top process that was running when the said data record was created, and a Verifying Time Stamp field indicating that the record is valid.

4. A database according to Claim 3, wherein said plurality of fields includes each of said User field, said Location field, said Dead flag and said Process field.

5. A database according to any preceding Claim, stored in a computer readable form in memory means selected from magnetic and optical storage devices.

6. A method for controlling a relational database comprising a plurality of data records, in which each data record includes a plurality of fields, the method comprising:
providing each said data record with a transaction time field identifying the time of creation of the said record in the database; and
whenever seeking to modify an existing data record in said database by modifying data in said existing data record or by a logical deletion, selecting the version of that existing data record in said database that is not dead that has the most recent transaction time, and creating a further data record comprising the data of the selected said existing data record modified to incorporate the said modification and given a current transaction time, said creating step being performed without altering the selected version or any previous version of the existing data record in said database.

7. A method according to Claim 6, wherein each said data record includes at least one of a User field identifying the user name of the maker of a particular data record, a Location field identifying the workstation at which the said data record was created, a Dead flag identifying a logical deletion if creation of the said data record corresponded to a logical deletion, and a Process field identifying the top process that was running when the said data record was created, and a Verifying Time Stamp field indicating that the record is valid.

8. A method according to Claim 7, wherein said data record includes each of said User field, said Location field, said Dead flag and said Process field.

9. A method for adding temporality to an existing non-temporal relational database comprising a plurality of pre-existing data records each including a plurality of fields, the method comprising:
for each pre-existing data record, creating a new data record in said database corresponding to the said pre-existing data record provided that no such corresponding data record already exists,
each said new data record having fields comprising said plurality of fields and at least one field additional to said plurality of fields, said at least one additional field including at least a transaction time field identifying the time of creation of the said record in the database, the data in the said plurality of fields in said new data record being identical to the data in the said plurality of fields in said pre-existing data record;
and, whenever seeking to modify either an existing data record in the database that includes the said at least one additional data field or a said pre-existing data record for which there is at least one corresponding existing data record in the database that includes the said at least one additional field, the modification consisting of modifying data in said existing data record or of a logical deletion, carrying out the steps of:
selecting the version of that existing data record in said database that is not dead that has the most recent transaction time, and creating a further data record in said database,
the further data record comprising the data of the selected said existing data record modified to incorporate the said modification, and
the said creating a further record step being performed without altering the selected version or any previous version of the existing data record in said database.

10. A method according to Claim 9, wherein, when the method is complete to the extent that there are no remaining pre-existing non-temporal data records that do not have a corresponding new temporal data record, all the pre-existing data records are treated as no longer present by one of being archived, being programmed to be ignored by programs subsequently acting on the database, and being deleted altogether from the database, thereby achieving a fully temporal database.

11. A method according to Claims 9 or 10, wherein said at least one additional field includes at least one of a User field identifying the user name of the maker of a particular data record, a Location field identifying the workstation at which the said data record was created, a Dead flag identifying a logical deletion if creation of the said data record corresponded to a logical deletion, and a Process field identifying the top process that was running when the said data record was created, and a Verifying Time Stamp field indicating that the record is valid.

12. A method according to Claim 11, wherein said at least one additional field includes each of said User field, said Location field, said Dead flag and said Process field.

13. A method according to Claim 10, wherein parallel running of the non-temporal database with the temporal database is enabled during the period between commencement of the said method and achievement of a fully temporal database by the additional step of replicating the said modification, so far as made to fields in said plurality of fields, made to create a said further data record, in the corresponding fields of the corresponding pre-existing data record.

14. A method for obtaining an accurate view of a database at any selected point in time for audit or forensic purposes, comprising the steps of: establishing a database according to Claim 1, whereby any individual data records may have a plurality of other corresponding data records equally available in said database and consisting of versions of that data record; setting a reference point equal to the selected point in time; and viewing one or more records in said database by selecting for each data record of interest that version of that data record that is not flagged as dead that has the most recent transaction time preceding the reference point.

15. A method for obtaining a security or validity view of a database at a particular point in time, comprising the steps of: establishing a database according to Claim 1, whereby any individual data records may have a plurality of other corresponding data records equally available in said database and consisting of versions of that data record, each such data record and earlier version of a data record having a user associated therewith being the user responsible for creating that record; setting up a security table for each user establishing that user's permissions for making changes to the database; setting a reference point equal to the selected point in time; selecting security or validity criteria form said security table; and viewing one or more records in said database by selecting for each data record of interest that version of that data record that has the most recent transaction time preceding the reference point consistent with said selected criteria.
